# FASCICULE DE BREVET EUROPEEN

(11) **EP 3 519 262 B1**
(45) Date de publication et mention de la délivrance du brevet: **16.06.2021**
(21) Numéro de dépôt: 17752085.5
(22) Date de dépôt: 07.08.2017
(51) Int. Cl.: B60S 1/52, B60S 1/56, G02B 27/00

(54) **DISPOSITIF DE NETTOYAGE D'UN CAPTEUR OPTIQUE D'UN SYSTEME DE DETECTION OPTIQUE POUR VEHICULE AUTOMOBILE**
VORRICHTUNG ZUR REINIGUNG EINES OPTISCHEN SENSORS EINES OPTISCHEN DETEKTIONSSYSTEMS FÜR EIN KRAFTFAHRZEUG
DEVICE FOR CLEANING AN OPTICAL SENSOR OF AN OPTICAL DETECTION SYSTEM FOR A MOTOR VEHICLE

(30) Priorité: 28.09.2016 FR 1659181
(43) Date de publication de la demande: 07.08.2019
(73) Titulaire: Valeo Systèmes d'Essuyage, 78322 Le Mesnil Saint Denis (FR)
(72) Inventeur: GIRAUD, Frédéric, 78322 Le Mesnil Saint Denis (FR); TREBOUET, Marcel, 78322 Le Mesnil Saint Denis (FR)
(74) Mandataire: Valeo Visibility
(86) Numéro de dépôt international: PCT/EP2017/069895
(87) Numéro de publication internationale: WO 2018/059805

(56) Documents cités:
- FR-A1- 2 720 044
- FR-A1- 3 021 014

## Description

La présente invention se rapporte au domaine des dispositifs d'aide à la conduite et des systèmes de détection optique utilisés à cette fin, et elle concerne plus particulièrement les dispositifs de nettoyage destinés à projeter au moins un fluide vers une surface à nettoyer d'un véhicule automobile, tel qu'un capteur optique d'un système de détection optique pour véhicule.

Le document FR 3 021 014 divulgue le préambule de la revendication 1.

On appelle système de détection optique tout système comportant des capteurs optiques tels que des caméras, des capteurs laser ou autres capteurs basés sur l'émission et/ou la détection de la lumière dans le spectre visible ou invisible pour l'Homme, en particulier l'infrarouge.

De tels systèmes de détection optiques équipent un nombre de plus en plus grand de véhicules automobiles afin d'aider le conducteur du véhicule dans certaines situations de conduite, dont une, bien connue, est l'aide au stationnement. Pour que cette aide soit la plus efficace possible, les données fournies par le système de détection optique doivent être de la meilleure qualité possible, et il est donc indispensable de disposer de capteurs propres pour réaliser ces acquisitions de données. Pour ce faire, un dispositif de nettoyage peut être commandé pour injecter, sur un capteur du système de détection optique (par exemple la lentille d'une caméra de prise de vues), un fluide nettoyant juste avant que soit réalisée la détection (par exemple la prise de vue).

Ces dispositifs de nettoyage ne doivent pas gêner le fonctionnement du capteur optique, c'est-à-dire qu'ils ne doivent notamment pas se trouver dans le champ de vision du capteur, et ils doivent être par ailleurs le plus compact possible pour répondre aux contraintes d'encombrement du véhicule. Pour cela, le plus souvent, les dispositifs de nettoyage comportent une partie mobile entre une position de nettoyage, déployée, dans laquelle des orifices de distribution que la partie mobile comporte se trouvent au voisinage de la surface du capteur à nettoyer, et une position de repos, dans laquelle cette partie mobile est rétractée pour ne pas gêner la détection optique au moyen du capteur considéré.

La partie mobile forme un piston logé dans un cylindre de vérin. Il est connu d'utiliser la pression du fluide de nettoyage admis dans le cylindre pour entraîner le déplacement du piston vers sa position de nettoyage, le fluide de nettoyage étant par ailleurs destiné à pénétrer dans un conduit interne de la partie mobile, au moins lorsque celle-ci est dans la position de nettoyage, pour être ensuite injecté via les orifices de distribution.

Le fluide de nettoyage pénètre dans une chambre d'admission ménagée dans le corps via un orifice d'admission réalisé dans un embout du cylindre, et le fluide présent dans la chambre pousse sur une extrémité du piston mobile dans le corps. Le piston coulisse alors le long d'une tige solidaire de langue.

Il est connu de ménager à l'extrémité libre de la tige fixe, solidaire du cylindre et le long duquel coulisse le piston, des rainures dans lesquelles est susceptible de s'insérer le fluide de nettoyage depuis une première extrémité amont tournée vers la chambre d'admission. Jusqu'à une position déterminée relative du piston par rapport à la tige, le coulissement se fait de manière étanche : la position du piston recouvre intégralement les rainures formées dans l'épaisseur de la tige. Le fluide présent dans la chambre est stoppé par un élément d'étanchéité et ne peut accéder aux rainures de passage, de sorte que le cheminement du fluide vers les orifices de distribution est bloqué.

Au-delà d'une position définie, les rainures ne sont plus recouvertes par le piston au niveau de leur première extrémité amont, et cela autorise le passage du fluide dans les rainures, entre la tige et le piston, vers l'intérieur de la partie mobile jusqu'aux orifices de distribution.

À titre d'exemple, le document FR3021014 divulgue un tel dispositif de nettoyage dans lequel la tige fixe solidaire du cylindre comporte périphériquement une pluralité de rainures formant chacune passage pour le liquide de nettoyage. Comme expliqué précédemment, l'éjection du fluide ne peut se faire que lorsque la partie mobile atteint une position déterminée par rapport à la tige et donc lorsque les orifices de distribution agencés en bout de cette partie mobile atteint une position déterminée en regard du capteur optique. A ce stade, le fluide de nettoyage arrive massivement dans le conduit interne, les extrémités des rainures étant dégagées simultanément.

Un inconvénient de ce mode de réalisation est que le fluide de nettoyage sort avec un débit maximal du début à la fin de la projection et l'absence de variation du débit empêche toute optimisation de la consommation du fluide.

La présente invention a pour but de proposer un dispositif de nettoyage, destiné à projeter au moins un fluide vers une surface à nettoyer d'un véhicule automobile, tel qu'un capteur optique d'un système de détection optique qui, par un agencement et un dimensionnement particuliers de canaux de passage de fluide de nettoyage, permet de séquencer l'éjection de fluide de nettoyage par les orifices d'admission, de sorte que la consommation de fluide est optimisée et que l'efficacité du nettoyage du capteur optique est améliorée.

L'invention a pour premier objet un dispositif de nettoyage destiné à projeter au moins un fluide vers une surface à nettoyer d'un véhicule automobile, tel qu'un capteur optique d'un système de détection optique pour véhicule, comprenant :
- un corps creux fermé à une extrémité par une bride d'entrée,
- un piston mobile en coulissement le long d'un axe longitudinal dans le corps creux et porteur à une première extrémité d'un élément de distribution de fluide de nettoyage, le piston étant mobile entre une position extrême rétractée et une position extrême déployée,
- une tige solidaire de la bride d'entrée qui s'étend parallèlement à l'axe longitudinal et le long de laquelle coulisse le piston mobile,
- des moyens d'acheminement de fluide de nettoyage à travers le corps creux, depuis un embout d'admission de fluide jusqu'à l'élément de distribution, comprenant au moins une chambre d'admission dont le volume varie en fonction du déplacement du piston mobile et un conduit de distribution ménagé dans le piston mobile,
- le piston et/ou la tige sont configurés pour prévoir entre eux des canaux de passage de fluide de nettoyage.

Le dispositif de nettoyage selon l'invention est caractérisé en ce qu'au moins deux canaux de passage présentent des dimensions axiales, selon l'axe longitudinal, différentes, chaque canal de passage présentant une dimension axiale distincte de celle des canaux voisins dans l'agencement en série circulaire des canaux.

Selon l'invention, les « moyens d'acheminement » du fluide de nettoyage regroupent l'ensemble des conduits, chambres d'admission et/ou canaux de passage qui permettent d'amener le fluide de nettoyage depuis l'entrée ou zone d'admission jusqu'à l'élément de distribution. Ces moyens d'acheminement contiennent au moins un conduit de distribution ménagé dans le piston mobile, lequel est constitué, de préférence, de deux portions de diamètres différents. La partie supérieure élargie du conduit de distribution est définie de manière à permettre le coulissement de la tige dans le piston mobile tandis que la partie inférieure dudit conduit permet, par son diamètre moindre, de mettre sous pression le fluide de manière à éjecter celui-ci sur le capteur optique en vue de son nettoyage.

Selon l'invention, « les moyens de déplacement » du piston sont formés au moins en partie par les moyens d'acheminement du fluide, en particulier par la pression dudit fluide de nettoyage exercée sur ledit piston.

Selon différentes caractéristiques de l'invention, prises seules ou en combinaison, on peut prévoir que :
- les canaux de passage soient agencés parallèlement à l'axe longitudinal ;
- au moins deux canaux de passage présentent des dimensions radiales variables ;
- au moins un canal de passage est interrompu le long de la dimension longitudinale ; les canaux de passage peuvent s'interrompre puis redémarrer, de telle sorte que le passage de fluide longitudinal entre la tige et le piston est interrompu, à l'endroit de ces portions sans canal.

Par l'expression « dimension axiale », on entend la hauteur d'un canal de passage, dans la direction de l'axe longitudinal d'allongement du piston mobile tandis que par « dimension radiale », on entend parler de profondeur dudit canal, dans l'épaisseur de la partie du piston mobile et/ou de la tige dans laquelle les canaux de passage peuvent être ménagés.

Les canaux de passage peuvent être ménagés par des rainures ménagées dans le piston mobile et/ou dans la tige, et recouvertes par la tige, respectivement par le piston. Les agencements et dimensionnements particuliers des rainures formant les canaux de passage permettent de faire varier le débit de fluide en présentant des sections de passage plus ou moins grandes. On comprend dès lors que le fluide de nettoyage s'écoulera prioritairement par le canal de passage présentant la plus grande dimension axiale. Quelles que soient les géométries et dimensions radiales des canaux de passage, il est nécessaire de maintenir une portée suffisante entre deux canaux consécutifs afin de permettre un guidage optimal du piston autour de la tige.

Selon une autre série de caractéristiques, on peut prévoir que :
- le canal de passage qui présente la plus grande dimension axiale présente la plus petite dimension radiale ; on comprend dès lors que l'augmentation de la dimension radiale d'un canal de passage permet d'augmenter le débit de passage du fluide ; il est particulièrement avantageux de pouvoir augmenter le débit de fluide projeté par l'élément de projection sur le capteur optique lorsque l'élément de projection est correctement déployé ;
- le dispositif de nettoyage comporte au moins trois canaux de passage ;
- les canaux de passage sont agencés en série autour de l'axe longitudinal, avec une évolution progressive des dimensions axiales des canaux de passage du début à la fin de la série.

Dans un mode de réalisation préféré du dispositif de nettoyage, celui-ci comporte un embout d'admission de fluide formé en saillie de la bride d'entrée et excentré par rapport à l'axe longitudinal sur lequel est centré le corps creux. L'embout d'admission de fluide débouche à l'intérieur du corps creux dans une chambre d'admission délimitée au moins en partie par la bride d'entrée, une paroi périphérique du corps creux et par le piston mobile.

Les canaux de passage peuvent notamment être formés par une rainure ménagée dans le piston mobile et recouverte, intégralement dans la position extrême rétractée et partiellement dans les autres positions relatives du piston et de la tige, par la tige. Plus précisément, les rainures peuvent être ménagées sur la paroi interne du piston délimitant le conduit de distribution, ces rainures débouchant sur la chambre d'admission.

Avantageusement, les moyens de déplacement du piston comprennent, outre les moyens d'acheminement du fluide aptes à mettre sous pression ledit fluide de nettoyage, des moyens élastiques de rappel en position, logés dans le corps creux pour tendre à rappeler en position de repos ledit piston. De préférence, les moyens élastiques de rappel en position sont logés dans le corps creux pour porter contre le piston creux, à l'opposé de la chambre d'admission. Dans un mode de réalisation, les moyens élastiques de rappel en position sont constitués d'au moins un ressort de compression apte à se déformer sous l'effet de la pression du fluide de nettoyage de manière à favoriser le déplacement longitudinal du piston creux. On comprend ainsi qu'en phase de chargement du fluide dans le dispositif, le piston creux se déplace à l'opposé de la chambre d'admission puis effectue un trajet inverse de rappel à l'issue de la phase de nettoyage par éjection du fluide.

Selon une série de caractéristiques, on peut prévoir que :
- le piston creux comporte une partie centrale sensiblement cylindrique, apte à coulisser au sein d'un manchon de guidage creux ménagé à l'extrémité du corps creux opposé à la bride d'entrée, une partie terminale de distribution prolongeant la partie centrale et à l'extrémité libre de laquelle l'élément de distribution est apte à être fixé, et une partie d'admission prolongeant la partie centrale à l'opposé de la partie terminale de distribution et configurée pour coulisser à l'intérieur dudit corps creux ;
- les canaux de passage comportent respectivement une rainure ménagée dans le piston le long de la partie d'admission ;
- la partie terminale de distribution du piston est agencée pour que le conduit de distribution ménagé dans le piston puisse communiquer avec un canal de distribution de l'élément de distribution ;
- le piston comporte, au voisinage de son extrémité amont, une couronne, contre une face de laquelle peut prend appui le moyen élastique de rappel ; de préférence, ladite couronne comporte une gorge périphérique agencée dans sa paroi extérieure et apte à accueillir un élément d'étanchéité, de telle manière que le piston équipé dudit élément, puisse coulisser de manière étanche au sein du corps creux ;
- une gorge périphérique peut être agencée à une extrémité libre de la tige, pour accueillir un joint d'étanchéité, de telle manière que la tige, équipée dudit joint, puisse coulisser de manière étanche dans la partie centrale du piston.

Selon une autre caractéristique de l'invention et dans le but de s'inscrire dans un schéma hydraulique global, le dispositif de nettoyage d'un capteur peut comprendre, outre l'embout d'admission, le corps creux, la tige et le piston mobile porteur des canaux de passage, un réservoir de stockage du fluide de nettoyage, et des éléments de pilotage de la circulation de fluide de nettoyage entre le réservoir et l'embout d'admission. Lesdits éléments de pilotage peuvent être constitués d'une pompe et optionnellement d'une vanne solénoïde et sont configurés pour bloquer l'admission de fluide de nettoyage dans l'embout d'admission dans une position de repos, pour alimenter l'embout d'admission en fluide de nettoyage afin de déplacer l'élément de distribution dans une position de nettoyage d'une part et projeter du fluide de nettoyage d'autre part, et pour bloquer le fluide de nettoyage dans la chambre d'admission et le canal de distribution et maintenir l'élément de distribution dans la position de nettoyage.

Lorsqu'elle est intégrée dans le système hydraulique, la vanne solénoïde est une électrovanne 3 voies apte à permettre ou stopper le passage d'un fluide sous pression suivant trois positions différentes afin de permettre la circulation depuis la pompe jusqu'au vérin ou empêcher toute circulation ou encore permettre le retour de liquide depuis le vérin jusqu'au réservoir.

Un second objet de l'invention concerne un véhicule automobile équipé d'un ensemble de détection optique caractérisé en ce qu'il comporte au moins un dispositif de nettoyage tel que précédemment décrit, destiné à projeter au moins un fluide vers une surface à nettoyer d'un véhicule automobile, tel qu'un capteur optique d'un système de détection optique pour véhicule.

D'autres caractéristiques, détails et avantages de l'invention et de son fonctionnement ressortiront plus clairement à la lecture de la description donnée ci-après à titre indicatif, en relation avec les figures annexées, dans lesquelles :

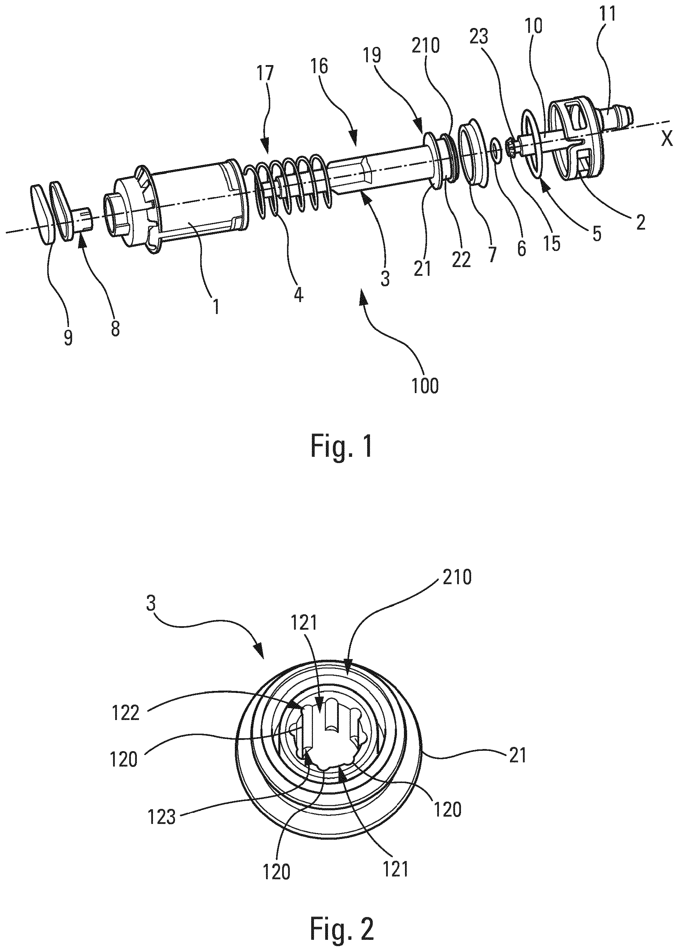

- la figure 1 est une vue en perspective éclatée d'un dispositif de nettoyage selon l'invention, destiné à projeter au moins un fluide vers une surface à nettoyer d'un véhicule automobile, tel qu'un capteur optique d'un système de détection optique, le dispositif de nettoyage comportant au moins un piston mobile en coulissement dans un corps creux le long d'une tige fixe et portant à une extrémité un élément de distribution du fluide ;
- la figure 2 est une vue en coupe du piston du dispositif de l'invention, suivant un plan perpendiculaire à l'axe longitudinal (X) de la figure 1, au niveau d'une partie d'extrémité à l'opposé de l'extrémité portant l'élément de distribution de fluide, illustrant un exemple de mode de réalisation et de répartition de canaux de passage ménagés circonférentiellement sur une paroi intérieure dudit piston ;

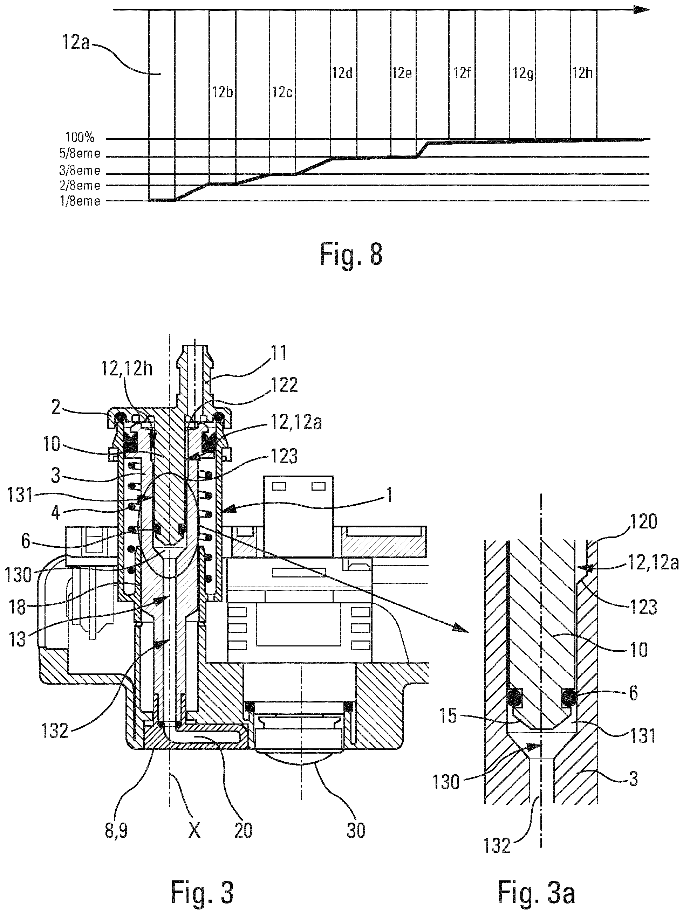

- la figure 3 est une vue en coupe, dans un plan de coupe comprenant l'axe longitudinal (X), du dispositif de nettoyage de la figure 1 lorsque le piston mobile est en position extrême rétractée, ou position de repos, et la figure 3a est une vue de détail de l'extrémité libre de la tige autour duquel coulisse le piston dans cette position de repos rétractée ;

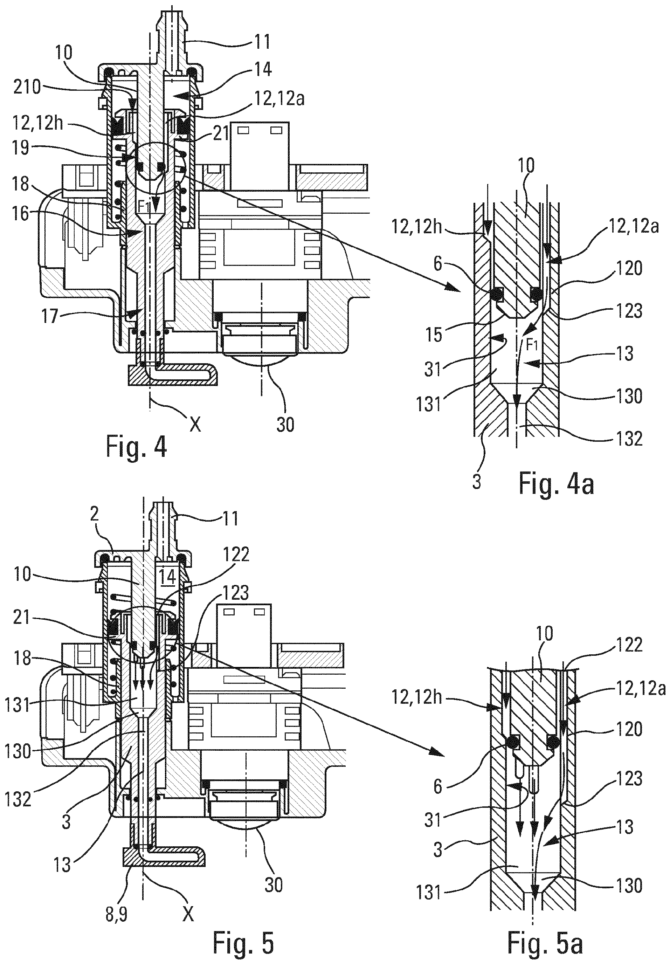

- la figure 4 est une vue en coupe, dans le même plan de coupe que celui de la figure 3, du dispositif de nettoyage de la figure 1, dans une première position intermédiaire dans laquelle le fluide de nettoyage est autorisé à passer à l'intérieur du piston mobile par le biais d'une quantité limitée de canaux de passage, et la figure 4a est une vue de détail de l'extrémité libre de la tige autour duquel coulisse le piston dans cette première position intermédiaire ;
- la figure 5 est une vue en coupe, dans le même plan de coupe que celui de la figure 3, du dispositif de nettoyage de la figure 1, dans une deuxième position intermédiaire dans laquelle le fluide de nettoyage est autorisé à passer à l'intérieur du piston mobile par le biais d'une quantité importante de canaux de passage, et la figure 5a est une vue de détail de l'extrémité libre de la tige autour duquel coulisse le piston dans cette deuxième position intermédiaire ;

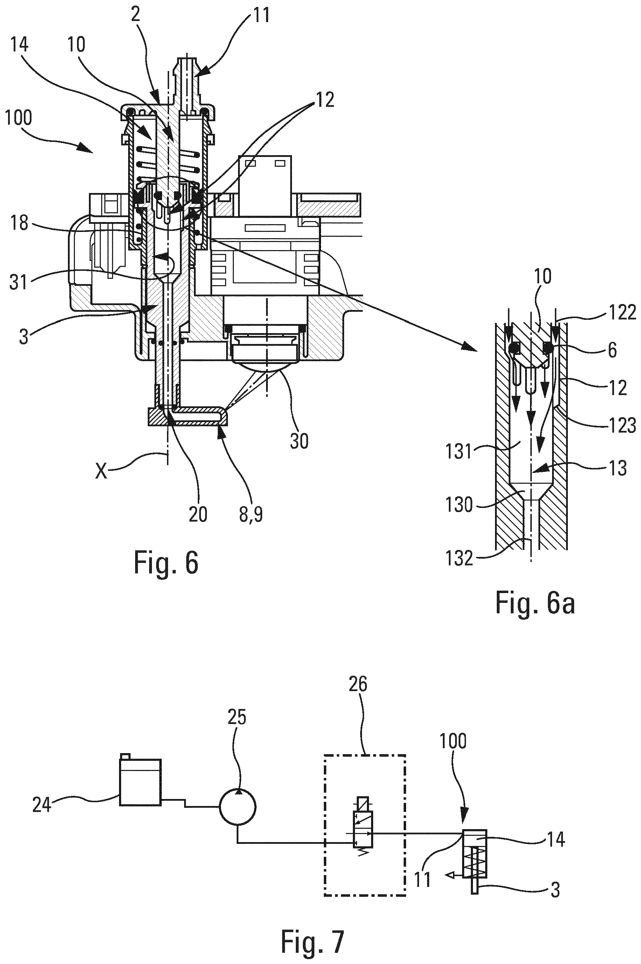

- la figure 6 est une vue en coupe, dans le même plan de coupe que celui de la figure 3, du dispositif de nettoyage de la figure 1, lorsque le piston mobile est en position extrême déployée ;
- la figure 7 est une représentation schématique de l'architecture hydraulique associée au dispositif de nettoyage selon l'invention ;
- la figure 8 présente un premier exemple d'évolution du débit d'un fluide de nettoyage au cours d'un déplacement du piston mobile entre une position extrême rétractée, de repos, et une position extrême déployée ;

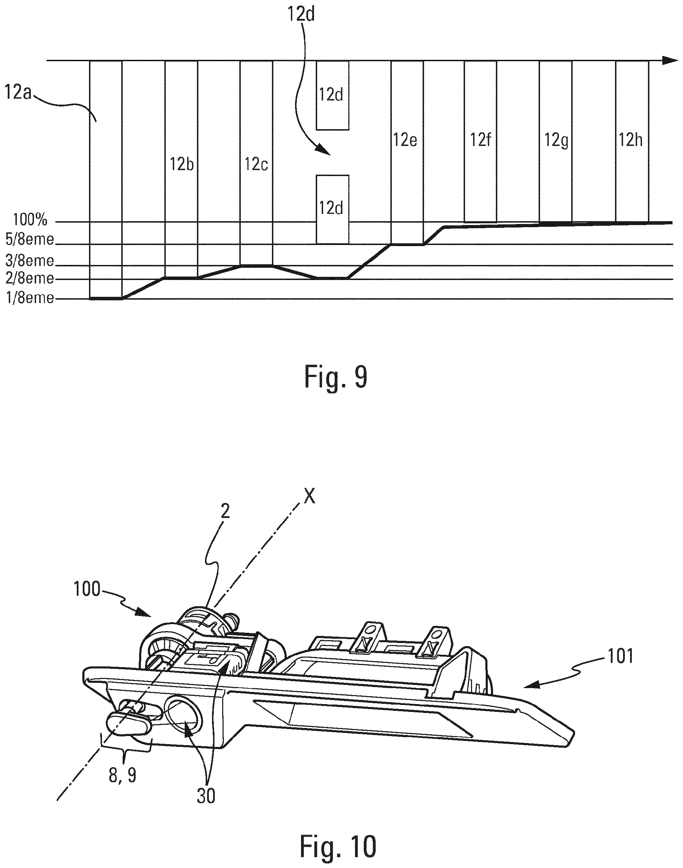

- la figure 9 présente un deuxième exemple d'évolution du débit d'un fluide de nettoyage au cours d'un déplacement du piston mobile entre une position extrême rétractée, de repos, et une position extrême déployée, dans un cas particulier où l'un des canaux de passage est interrompu ; et
- la figure 10 est une vue d'ensemble d'un élément support d'un système de détection optique et d'un dispositif de nettoyage associé, tel qu'il peut être monté sur un élément de carrosserie d'un véhicule automobile.

Il est tout d'abord à noter que si les figures exposent l'invention de manière détaillée pour sa mise en œuvre, elles peuvent, bien entendu, servir à mieux définir l'invention le cas échéant. On comprendra également que le mode de réalisation de l'invention illustré par les figures est donné à titre d'exemple non limitatif. Par conséquent, d'autres configurations du dispositif selon l'invention peuvent être réalisées, notamment par variations de l'agencement, de la répartition et du dimensionnement axial et/ou radial des canaux de passage, lesquelles impacteront nécessairement les débits du fluide de nettoyage et pressions associées.

Il est également rappelé que, dans la description qui suit, les dénominations "amont" et "aval" se réfèrent à la direction d'écoulement du fluide de nettoyage dans le dispositif de nettoyage selon l'invention. Ainsi, la dénomination "amont" se réfère au côté du dispositif selon l'invention par lequel ce fluide de nettoyage est admis en son sein, et la dénomination "aval" se réfère au côté du dispositif selon l'invention par lequel le fluide de nettoyage est distribué à l'extérieur de celui-ci, vers une surface d'un capteur optique d'un ensemble de détection optique d'un véhicule automobile.

La figure 1 illustre un dispositif de nettoyage 100 destiné selon l'invention à projeter au moins un fluide vers une surface à nettoyer d'un véhicule automobile, tel qu'un capteur optique 30, et on a illustré par ailleurs sur la figure 10 une vue d'un élément support 101 configuré pour recevoir un capteur optique 30 et un dispositif de nettoyage 100 juxtaposé.

Le dispositif de nettoyage est constitué pour l'essentiel, de l'amont vers l'aval suivant un axe longitudinal (X) d'allongement du dispositif de nettoyage, d'un embout d'admission de fluide 11, d'une bride d'entrée 2, d'une tige 10 solidaire de la bride d'entrée 2, d'un piston 3, d'un moyen élastique de rappel en position 4 et d'un élément de distribution 8, 9. Chacun de ces composants est logé à l'intérieur, ou fixé à une extrémité, d'un corps creux 1 de révolution autour d'un axe longitudinal (X).

L'embout d'admission de fluide 11 est formé en saillie de la bride d'entrée 2, et il s'étend à l'opposé du corps creux, en étant ici excentré par rapport à l'axe longitudinal (X) du corps creux 1. L'embout d'admission 11 présente un alésage longitudinal traversant et débouchant à l'intérieur du corps creux 1 dans une chambre d'admission 14 (visible notamment sur les figures 4 à 6) délimitée au moins en partie par la bride d'entrée 2, une paroi périphérique du corps creux 1 et par le piston mobile 3.

La bride d'entrée 2 est configurée pour fermer l'extrémité amont du corps creux 1. Un organe d'étanchéité 5 peut être prévu au niveau de cette fermeture. La bride d'entrée est configurée pour supporter la tige 10 sur sa face interne, tournée vers l'intérieur du corps creux.

La tige 10 s'étend en saillie de la bride d'entrée 2, à l'intérieur du corps creux 1. La tige présente une forme cylindrique à section circulaire, dont la face périphérique extérieure est lisse. L'extrémité libre 15 de la tige 10, qui s'étend à l'opposé de la bride d'entrée 2, comporte une gorge périphérique 23 apte à accueillir un joint torique d'étanchéité 6 de manière à permettre le coulissement étanche de la tige 10 dans le piston 3. Tel que cela sera décrit ci-après, le joint torique d'étanchéité 6 est configuré pour prendre appui contre une face interne du piston de sorte que le fluide est bloqué en amont du joint torique d'étanchéité entre la tige et le piston, dès lors que des rainures ménagées dans le piston ne permettent pas l'échappement de fluide vers l'élément de distribution.

Le piston 3 est porteur à une première extrémité, ou extrémité aval, d'un élément de distribution 8, 9 de fluide de nettoyage constitué dans l'exemple illustré de deux parties complémentaires en forme de L.

Le piston 3 comporte, au voisinage de son extrémité amont, c'est-à-dire l'extrémité tournée vers la bride d'entrée 2, une couronne 21 sur la paroi extérieure de laquelle est agencée une gorge périphérique 22, apte à accueillir un élément d'étanchéité 7 de manière à permettre le coulissement étanche du piston 3 dans le corps creux 1. L'élément d'étanchéité 7 est de préférence un joint à lèvres, apte à limiter les frottements du piston 3 dans le corps creux 1.

Le piston est creusé d'une extrémité à l'autre par un conduit interne de circulation du fluide de nettoyage. On décrira plus en détail ci-après la forme interne ici spécifique du piston, notamment en ce qu'il présente une pluralité de rainures configurées pour former des canaux de passage à longueurs variables qui permettent un passage de liquide à débit contrôlé.

Le piston mobile 3 coulisse dans le corps creux 1 entre une position extrême rétractée, ou position de repos (visible sur la figure 3), et une position extrême déployée, ou position de nettoyage (visible sur la figure 6).

Le fluide de nettoyage est injecté dans le corps creux via l'embout d'admission pour être ensuite éjecté par les orifices de distribution. Des moyens d'acheminement du fluide de nettoyage à travers le corps creux 1, depuis l'embout d'admission 11 de fluide jusqu'à l'élément de distribution 8, 9, comprennent au moins la chambre d'admission 14 et un conduit de distribution 13 (visible sur les figures 3 à 6) ménagé dans le piston mobile 3.

Le moyen élastique de rappel 4, de préférence un ressort hélicoïdal, est agencé dans le corps creux entre la paroi périphérique et le piston, de manière à prendre appui à une extrémité sur le fond du corps et à l'extrémité opposée sur une face de la couronne 21.

Le piston est monté dans le corps creux autour de la tige 10 qui s'étend sensiblement coaxialement au piston mobile 3, de manière à ce qu'au moins l'extrémité libre 15 de la tige 10 s'étende à l'intérieur du conduit interne de distribution 13 du piston mobile 3. Le piston creux 3 comporte des portions sensiblement cylindriques que l'on peut définir, de l'amont vers l'aval, comme étant une partie d'admission 19 portant la couronne 21, une partie centrale 16 apte à coulisser au sein d'un manchon de guidage creux 18 ménagé à l'extrémité aval du corps creux 1 et une partie terminale de distribution 17, de diamètre moindre, à l'extrémité libre de laquelle l'élément de distribution 8, 9 est apte à être fixé. Le conduit de distribution 13 ménagé dans le piston mobile est constitué d'au moins deux portions de diamètres différents, parmi lesquelles une première partie proximale 131 s'étendant d'une extrémité amont du conduit, c'est-à-dire une extrémité débouchant sur la chambre d'admission 14, et une deuxième partie distale 132 s'étendant depuis l'extrémité aval du conduit. Tel qu'illustré sur les figures 3 à 6, une zone de rétrécissement 130 est agencée entre les parties proximale et distale de diamètres différents.

La première partie proximale 131 élargie du conduit de distribution 13 est définie de manière à permettre le coulissement relatif de la tige 10 par rapport au piston mobile 3 tandis que la deuxième partie inférieure dudit conduit 13 permet, par son diamètre moindre et la zone de rétrécissement qui en découle, de mettre sous pression le fluide de manière à éjecter celui-ci sur le capteur optique 30 en vue de son nettoyage. La partie terminale de distribution 17 du piston 3 est agencée de manière à coopérer avec la portion amont 8 de l'élément de distribution afin que la deuxième partie inférieure du conduit de distribution 13 puisse communiquer avec un canal de distribution 20 ménagé dans l'élément de distribution 8, 9.

Le piston 3 et/ou la tige 10 sont configurés pour prévoir entre eux des canaux de passage 12 qui autorisent l'écoulement de fluide de nettoyage depuis la chambre d'admission 14 (visible sur la figure 3), dont le volume variable est défini en fonction de la position du piston 3 relativement à la bride d'entrée 2. Les canaux de passage 12 sont obtenus par des rainures 120 réalisées dans la paroi extérieure de la tige, respectivement dans la paroi intérieure 31 du piston, ces rainures étant fermées par le piston, respectivement la tige. Dans le mode de réalisation illustré par la figure 1, les canaux de passage sont formés chacun par une rainure 120 ménagée dans la paroi intérieure du piston 3 délimitant le conduit interne de distribution 13 le long de la partie d'admission 19 et fermée par le recouvrement de la face périphérique extérieure lisse de la tige 10.

La partie d'admission 19 comporte ainsi des rainures 120 tandis que la partie centrale 16 du piston est lisse. Le coulissement relatif du piston par rapport à la tige est ainsi un coulissement étanche, empêchant le passage de fluide, lorsque le joint torique d'étanchéité 6 ménagé en partie d'extrémité libre 15 de la tige 10 se trouve dans la partie centrale 16 du piston et porte donc de façon continue sur le pourtour du piston, tandis qu'il consiste en un coulissement perméable, permettant le passage de fluide, lorsque le joint torique d'étanchéité 6 se trouve dans la partie d'admission 19.

Selon une caractéristique essentielle de l'invention, les rainures 120 participant à former les canaux de passage 12 présentent des dimensions différentes les unes des autres, et notamment des dimensions longitudinales différentes, de manière à pouvoir piloter l'arrivée progressive de fluide de nettoyage dans l'élément de distribution 8,9.

La figure 2 illustre un mode de réalisation de l'invention et présente un exemple d'agencement, de répartition et de dimensionnement des rainures 120 formant les canaux de passage 12 ménagées sur la paroi intérieure 31 du piston 3. Une portée 121 suffisante est maintenue entre deux rainures consécutives. Par portée suffisante, on entend que quelle que soit la configuration des rainures et leur nombre, la tige et le piston présentent une surface de contact suffisamment importante par rapport aux trous laissés par les rainures, afin de permettre un guidage stable du piston autour de la tige. Dans cet exemple, huit canaux sont formés par l'association d'une des huit rainures ménagées dans la paroi intérieure 31 du piston 3 et de la tige portant contre cette paroi intérieure. En variante non illustrée, on pourra prévoir que les canaux de passage sont formés par des rainures ménagées sur la face périphérique extérieure de la tige et par la paroi intérieure du piston venant en recouvrement de ces rainures, étant entendu qu'il importe selon l'invention que les rainures participant à former les canaux de passage soient de longueurs différentes pour au moins deux d'entre elles.

Selon l'invention, ces rainures 120 formant les canaux de passage 12 sont configurées de telle sorte qu'une de ces rainures présente une dimension axiale, c'est-à-dire une dimension le long de l'axe longitudinal (X), distincte de la dimension axiale d'au moins une autre des rainures. On saura décrire ci-après une configuration possible des différentes hauteurs, ou dimensions axiales, des rainures participant à former les canaux de passage de fluide d'un dispositif de nettoyage selon l'invention.

Ces rainures 120 s'étendent axialement, entre une extrémité proximale 122, débouchant sur une face d'extrémité 210 de la couronne 21 qui participe à délimiter la chambre d'admission 14, et une extrémité distale 123, dans l'épaisseur du piston mobile3 et s'étendant à une dimension axiale déterminée de cette face d'extrémité proximale 210 de la couronne 21.

Ces rainures 120 participant à former les canaux de passage 12 peuvent également présenter des dimensions radiales ou profondeurs variables. On pourra notamment prévoir que la rainure qui présente la plus grande dimension axiale présente la plus petite dimension radiale, étant entendu que l'augmentation de la dimension radiale d'un canal de passage permet d'augmenter le débit de passage du fluide assuré par ce canal de passage. Il est particulièrement avantageux de pouvoir augmenter le débit de fluide projeté par l'élément de projection sur le capteur optique lorsque l'élément de projection est correctement déployé.

On va maintenant décrire plus en détails un exemple de déploiement contrôlé de l'élément de distribution dans le dispositif de nettoyage selon l'invention, en se référant notamment aux figures 3 à 6, qui illustrent des étapes successives du déploiement.

La figure 3 illustre le dispositif de nettoyage de l'invention dans une première position de repos, selon lequel l'élément de distribution 8, 9 est en position rétractée et logé dans la partie inférieure du corps du dispositif de nettoyage 100. Le piston est alors agencé de manière à ce que la partie d'admission 19 soit plaquée contre la bride d'entrée, la chambre d'admission 14 étant alors réduite à un volume minimal. Dans cette position de repos, le moyen élastique de rappel est à l'état non compressé définissant la longueur libre du ressort 4.

Il est notable que dans cette position de repos, l'extrémité libre 15 de la tige 10 s'étend profondément dans le conduit interne de distribution 13 ménagé dans le piston mobile, de telle sorte que cette extrémité libre 15 de la tige se trouve sensiblement au voisinage de la zone de rétrécissement 130. Dans cette position de repos, les rainures 120 agencées dans le piston 3 sont entièrement recouvertes par la tige 10 de sorte qu'au niveau de l'extrémité distale 123 de chacune de ces rainures, les canaux de passage sont fermés. La présence du joint torique d'étanchéité 6, agencé dans la gorge périphérique 23 de la tige et dimensionné pour frotter contre la paroi interne du piston, permet d'assurer l'étanchéité et d'éviter le passage de fluide vers l'élément de distribution.

Dans cette position de repos, du fluide est injecté dans le dispositif de nettoyage lorsqu'une action de nettoyage d'un capteur optique est commandée. Le fluide se répartit entre la bride d'entrée et le piston mobile, dans la chambre d'admission 14, et s'insère en outre dans les canaux de passage, chaque rainure formant un canal de passage ayant une extrémité proximale libre 123 qui débouche sur la face d'extrémité 210 de la couronne 21, et qui est donc accessible depuis la chambre d'admission. Tel que cela vient d'être décrit, les rainures sont recouvertes par le piston dans cette position intermédiaire et le fluide s'insérant dans les canaux y reste bloqué.

La figure 4 illustre le dispositif de nettoyage selon l'invention dans une première position intermédiaire entre la position de repos et la position extrême déployée. Cette première position intermédiaire est obtenue suite au coulissement du piston le long de la tige, sous l'effet de la pression du fluide de nettoyage, notamment contre la couronne 21 du piston 3, du fluide de nettoyage continuant à être injecté par l'embout d'admission. Dans cette première position intermédiaire, le piston a coulissé le long de la tige de sorte que l'extrémité libre 15 de la tige 10 s'est éloignée de la zone de rétrécissement 130 : le joint d'étanchéité 6 ne se trouve plus au niveau de la partie centrale 16 du piston mais au niveau de la partie d'admission 19 dans laquelle s'étendent les rainures 120. La tige et le joint d'étanchéité torique 6 ne recouvrent plus l'extrémité distale 123 de la rainure 120 présentant la plus grande dimension axiale, le joint d'étanchéité torique étant disposé entre cette extrémité distale dégagée et la face d'extrémité 210 de la couronne 21. Le fluide de nettoyage présent dans cette rainure peut alors s'infiltrer dans le conduit de distribution 13, tel qu'illustré par la flèche F1 visible sur la figure 4, et du fluide peut circuler depuis la chambre d'admission 14 vers l'élément de distribution 8,9 par le seul canal de passage dont l'extrémité distale n'est pas recouverte. Il en résulte un passage de fluide à un débit réduit de fluide, sensiblement égal à 1/n, n étant le nombre de canaux de passage agencés entre la tige et le piston, ici au nombre de huit.

La figure 5 illustre une deuxième position intermédiaire entre la position extrême de repos et la position extrême déployée, dans laquelle le fluide de nettoyage est autorisé à passer à l'intérieur du piston mobile par le biais des canaux dont une proportion importante, ici cinq sur huit, est découverte à son extrémité distale. Dans cette deuxième position intermédiaire, le piston a coulissé plus loin le long de la tige de sorte que l'extrémité libre 15 de la tige 10 s'est rapprochée de l'extrémité amont du conduit, c'est-à-dire l'extrémité débouchant sur la chambre d'admission 14. Le joint d'étanchéité 6 se trouve au niveau de la partie d'admission 19 dans laquelle s'étendent les rainures 120, avec la tige et le joint d'étanchéité torique 6 qui ne recouvrent plus l'extrémité distale de cinq des rainures 120, c'est-à-dire l'extrémité distale des cinq rainures présentant la plus grande dimension axiale. Le fluide peut circuler depuis la chambre d'admission 14 vers l'élément de distribution 8,9 par les cinq canaux de passage correspondants et il en résulte un passage de fluide à un débit intermédiaire, sensiblement égal à 5/n, n étant le nombre de canaux de passage agencés entre la tige et le piston, ici au nombre de huit.

La figure 6 illustre la position extrême déployée, c'est-à-dire la position de déploiement maximal du dispositif de nettoyage et d'éjection totale du fluide grâce à l'augmentation du débit à 100% par passage de fluide dans chacun des canaux de passage 12. La contre-pression exercée par le ressort 4 et/ou la butée de la couronne 21 du piston contre le manchon de guidage creux 18 permet de limiter le déplacement de la tige par rapport au piston et éviter que la tige ne s'échappe hors du conduit de distribution 13 ménagé dans le piston 3. Dans cette position de butée, l'extrémité distale de chacun des canaux est dégagée et le joint d'étanchéité 6 n'a pour effet que de bloquer le passage de fluide entre les deux parois interne et externe du piston et de la tige, sans gêner le passage dans les rainures. L'élément de distribution 8, 9 est alors complètement déployé hors du dispositif de nettoyage de manière à adopter une position optimale de nettoyage du capteur optique 30, et le débit d'éjection du fluide est alors maximal.

Grâce à la dimension axiale différente des rainures, on peut ainsi piloter le débit d'éjection en fonction du déploiement de l'élément de distribution et de la position du jet de fluide sur le capteur optique qui en découle.

A l'issue de cette phase de nettoyage par éjection de la totalité du fluide, le piston, après s'être déplacé à l'opposé de la chambre d'admission, effectue un trajet inverse de rappel sous l'effet combiné du rappel du ressort et de l'arrêt d'alimentation en fluide via l'embout d'admission, le ressort repoussant alors le piston dans sa position d'origine en repoussant le fluide restant hors de la chambre d'admission et hors du corps creux. Il convient de noter que le décalage axial des extrémités distales des rainures permet d'éviter la présence d'une surpression trop brutale lors du retour en position du piston dans le corps creux.

La figure 7 illustre schématiquement l'architecture hydraulique globale associée au dispositif de nettoyage 100 pouvant comprendre, outre l'embout d'admission 11, le corps creux 1, la tige 10 et le piston mobile 3 porteur des canaux de passage à dimensions axiales différentes, un réservoir de stockage 24 du fluide de nettoyage et des éléments de pilotage de la circulation de fluide de nettoyage entre le réservoir 24 et l'embout d'admission 11 dudit dispositif de nettoyage 100, lequel est, ici, schématiquement représenté par un vérin. Lesdits éléments de pilotage peuvent être constitués d'une pompe 25 et optionnellement d'une vanne solénoïde 26.

On comprend qu'à l'issue de la phase de nettoyage par éjection de la totalité du fluide, le fluide, sous l'effet du retour du piston poussé par le ressort en position de repos, traverse l'embout d'admission puis retourne vers la pompe et vers le réservoir de stockage.

La figure 8 illustre la variation du débit de fluide de nettoyage projeté sur un capteur optique au fur et à mesure du déplacement du piston mobile entre une position escamotée de repos et une position extrême déployée. On peut noter que contrairement à ce qui aurait été le cas avec un dispositif de l'art antérieur, avec lequel la variation de début aurait pris l'allure d'un créneau on/off, avec un débit à 0% avant l'obtention d'une position intermédiaire unique dans laquelle le piston ne recouvre plus l'extrémité des rainures et un débit à 100% après le passage de cette position intermédiaire unique, on a ici une évolution progressive par paliers, permise par la variation de la dimension axiale d'un canal de passage à un autre.

Dans cet exemple, il convient de noter que :
- un premier canal de passage 12a présente une dimension axiale plus grande que celle des autres ;
- un deuxième canal de passage 12b, non forcément agencé au voisinage direct du premier canal dans l'agencement en série circulaire des canaux, présente une dimension axiale moindre que celle du premier canal de passage mais supérieure à celle des autres canaux ;
- un troisième canal de passage 12c, non forcément au voisinage direct du deuxième canal dans l'agencement en série circulaire des canaux, présente une dimension axiale moindre que celle du deuxième canal de passage mais supérieure à celle des canaux autres que le premier et le deuxième ;
- un quatrième canal 12d et un cinquième canal 12e, non forcément directement voisins dans l'agencement en série circulaire des canaux, présentent des dimensions axiales égales, et moindres que celle trois premiers canaux de passage ; et
- un sixième canal 12f, un septième canal 12g et un huitième canal 12h, non forcément directement voisins dans l'agencement en série circulaire des canaux, présentent des dimensions axiales égales entre elles, et moindres que celle de tous les autres canaux de passage.

Dans cet exemple, on comprend que lorsque le piston mobile se trouve dans la position de repos, et jusqu'à ce qu'il atteigne la première position intermédiaire, aucun canal de passage n'est découvert et le liquide est bloqué, de sorte que le débit de passage de fluide vers l'élément de distribution 8,9 est nul. Dans la première position intermédiaire, seul le premier canal de passage, c'est-à-dire le canal présentant une dimension axiale la plus longue, voit son extrémité dégagée par la position relative du piston par rapport à la tige, et le fluide de nettoyage présent dans ce premier canal de passage 12a peut circuler vers l'élément de distribution via le canal interne 13 du piston : dans un exemple de réalisation où les huit canaux de passage ont chacun la même profondeur, c'est-à-dire la même dimension radiale, le débit de fluide de nettoyage passant vers l'élément de distribution est sensiblement égal à 1/8^{ème}. On comprend qu'au fur et à mesure de l'avancée du piston le long de la tige, les canaux de passage sont découverts successivement du plus haut, c'est-à-dire celui ayant la plus grande dimension axiale, au moins haut, le débit passant de fluide de nettoyage augmentant. Dans la deuxième position intermédiaire illustrée sur la figure 5, dans laquelle sont découverts, à titre d'exemple, les cinq premiers canaux de passage dans l'ordre de leur grandeur axiale, on comprend que le débit de fluide de nettoyage est sensiblement égal à 5/8^{ème}. On peut ainsi constater une évolution par palier du débit passant de fluide de nettoyage vers l'élément de distribution, avec dans l'exemple illustré sur la figure 8, un premier palier à 12,5%, un deuxième palier à 25%, un troisième palier à 37,5%, un quatrième palier à 62,5% et un dernier palier à 100%. L'évolution progressive sur les premiers paliers permet une phase de chargement et d'amorçage d'un débit réduit, tandis que l'évolution est plus rapide sur la fin du mouvement du piston, lorsque le dispositif de nettoyage est en position optimale pour nettoyer le capteur optique.

La figure 9 illustre un autre exemple de réalisation dans lequel l'un des canaux de passage présente une interruption sensiblement en son milieu. Tel que cela va être décrit ci-après, cet agencement permet de jouer sur la quantité de fluide projeté relativement au déploiement du piston mobile et donc du dispositif de nettoyage. On peut noter que l'évolution entre le débit à 0% et le débit à 100% est globalement, comme elle a été présentée dans le premier exemple de réalisation figure 8, progressive par paliers, mais avec une rupture au milieu de cette progression avant de la reprendre.

Dans cet exemple de réalisation, il convient de noter que les trois premiers canaux de passage 12a à 12c sont similaires à ceux précédemment décrits, ainsi que les quatre derniers canaux de passage 12e à 12h. Par contre, le quatrième canal 12d diffère en ce que la rainure est interrompue de manière à former une zone neutre 120d dans laquelle la paroi de la tige et/ou du piston n'est pas usinée.

On peut ainsi constater, dans l'exemple illustré sur la figure 9, une évolution par palier du débit passant de fluide de nettoyage vers l'élément de distribution, avec dans un premier temps une évolution progressive, avec un premier palier à 12,5%, un deuxième palier à 25% et un troisième palier à 37,5%, puis une évolution dégressive avec un retour au deuxième palier à 25%, de manière à limiter la projection de fluide dans cette amorce de déplacement du piston mobile, et enfin une nouvelle évolution progressive, avec un saut vers un quatrième palier 62% puis un dernier palier à 100%. Dans cette dernière phase d'évolution, l'augmentation est plus brutale, le saut du deuxième palier au quatrième palier étant plus marqué. On assure ainsi, grâce à cette rupture dans le canal de passage, un jet de fluide sous pression permettant, alors que le piston mobile est dans une position intermédiaire suffisamment déployée, un nettoyage plus efficace.

La description qui précède explique clairement comment l'invention permet d'atteindre les objectifs qu'elle s'est fixés et notamment de proposer un dispositif de nettoyage d'un capteur optique d'un véhicule automobile qui, par un agencement, une répartition et un dimensionnement particuliers de canaux de passage de fluide de nettoyage, permet de séquencer le remplissage en fluide par un contrôle du débit dudit fluide et de la pression associée et donc d'optimiser la consommation en fluide et d'améliorer l'efficacité du nettoyage du capteur optique. La présente invention n'est pas limitée aux modes de réalisation donnés à titre d'exemples non limitatifs.

## Revendications

1. Dispositif de nettoyage (100), destiné à projeter au moins un fluide vers une surface à nettoyer d'un véhicule automobile, tel qu'un capteur optique d'un système de détection optique, le dispositif de nettoyage comprenant au moins :
- un corps creux (1) fermé à une extrémité par une bride d'entrée (2),
- un piston mobile (3) en coulissement le long d'un axe longitudinal (X) dans le corps creux (1) et porteur à une première extrémité d'un élément de distribution (8, 9) de fluide de nettoyage, le piston étant mobile entre une position extrême rétractée et une position extrême déployée,
- une tige (10) solidaire de la bride d'entrée (2) qui s'étend parallèlement à l'axe longitudinal (X) et le long de laquelle coulisse le piston mobile (3),
- des moyens d'acheminement de fluide de nettoyage à travers le corps creux (1), depuis un embout d'admission (11) de fluide jusqu'à l'élément de distribution (8, 9), comprenant au moins une chambre d'admission (14) dont le volume varie en fonction du déplacement du piston mobile (3) et un conduit de distribution (13) ménagé dans le piston mobile (3),
- le piston (3) et/ou la tige (10) étant configurés pour prévoir entre eux des canaux de passage (12) de fluide de nettoyage,
**caractérisé en ce qu'**au moins deux canaux de passage (12) présentent des dimensions axiales, selon l'axe longitudinal (X), différentes, chaque canal de passage (12) présentant une dimension axiale distincte de celle des canaux voisins dans l'agencement en série circulaire des canaux.

2. Dispositif de nettoyage selon la revendication 1, **caractérisé en ce que** les canaux de passage (12) sont agencés parallèlement à l'axe longitudinal (X).

3. Dispositif de nettoyage selon la revendication 1 ou 2, **caractérisé en ce qu'**au moins deux canaux de passage (12) présentent des dimensions radiales variables.

4. Dispositif de nettoyage selon la revendication précédente, **caractérisé en ce que** le canal de passage (12) qui présente la plus grande dimension axiale présente la plus petite dimension radiale.

5. Dispositif de nettoyage selon l'une des revendications précédentes, **caractérisé en ce qu'**au moins un canal de passage (12) est interrompu le long de la dimension longitudinale (X).

6. Dispositif de nettoyage selon l'une quelconque des revendications précédentes, **caractérisé en ce que** les canaux de passage (12) sont agencés en série autour de l'axe longitudinal (X), avec une évolution progressive des dimensions axiales des canaux de passage (12) du début à la fin de la série.

7. Dispositif de nettoyage selon l'une quelconque des revendications précédentes, **caractérisé en ce que** les canaux de passage (12) comportent respectivement une rainure (120) ménagée dans le piston mobile (3) et/ou dans la tige (10).

8. Dispositif de nettoyage selon la revendication précédente, **caractérisé en ce que** les rainures (120) sont ménagées sur la paroi interne du piston (3) délimitant le conduit de distribution (13), ces rainures débouchant sur la chambre d'admission (14).

9. Dispositif de nettoyage selon l'une quelconque des revendications précédentes, **caractérisé en ce que** des moyens de déplacement du piston (3) comprennent, outre les moyens d'acheminement du fluide, des moyens élastiques (4) logés dans le corps creux (1) pour tendre à rappeler en position extrême de repos le piston mobile (3).

10. Dispositif de nettoyage selon l'une quelconque des revendications précédentes, **caractérisé en ce que** le piston creux (3) comporte une partie centrale (16) sensiblement cylindrique, apte à coulisser au sein d'un manchon de guidage creux (18) ménagé à l'extrémité du corps creux (1) opposé à la bride d'entrée (2), une partie terminale de distribution (17) prolongeant la partie centrale (16) et à l'extrémité libre de laquelle l'élément de distribution (8, 9) est apte à être fixé, et une partie d'admission (19) prolongeant la partie centrale (16) à l'opposé de la partie terminale de distribution (17) et configurée pour coulisser à l'intérieur du corps creux (1).

11. Dispositif de nettoyage selon la revendication précédente, **caractérisé en ce que** les canaux de passage (12) comportent respectivement une rainure (120) ménagée dans le piston (3) le long de la partie d'admission (19).

12. Dispositif de nettoyage selon l'une quelconque des revendications 10 ou 11, **caractérisé en ce qu'**une gorge périphérique (23) est agencée à une extrémité libre (15) de la tige (10), pour accueillir un joint d'étanchéité (6), de telle manière que la tige (10), équipée dudit joint (6), puisse coulisser de manière étanche dans la partie centrale (19) du piston (3).

13. Véhicule automobile équipé d'un système de détection optique et d'un capteur optique associé, **caractérisé en ce qu'**il comporte au moins un dispositif de nettoyage selon l'une quelconque des revendications précédentes, destiné à projeter au moins un fluide vers une surface du capteur optique à nettoyer.

## Patentansprüche

1. Reinigungsvorrichtung (100), die dazu bestimmt ist, mindestens ein Fluid auf eine zu reinigende Oberfläche eines Kraftfahrzeugs, wie etwa eines optischen Sensors eines optischen Detektionssystems, zu spritzen, wobei die Reinigungsvorrichtung mindestens Folgendes beinhaltet:
- einen Hohlkörper (1), der an einem Ende durch einen Eintrittsflansch (2) verschlossen ist,
- einen bewegbaren Kolben (3), der entlang einer Längsachse (X) in dem Hohlkörper (1) gleitet und an einem ersten Ende ein Element zum Verteilen (8, 9) von Reinigungsfluid trägt, wobei der Kolben zwischen einer eingefahrenen Endstellung und einer ausgefahrenen Endstellung bewegbar ist,
- einen Schaft (10), der fest an dem Eintrittsflansch (2) befestigt ist und sich parallel zu der Längsachse (X) erstreckt und entlang dessen der bewegbare Kolben (3) gleitet,
- Mittel zum Zuführen von Reinigungsfluid durch den Hohlkörper (1), von einem Fluideinlassstutzen (11) bis zu dem Verteilerelement (8, 9), beinhaltend mindestens eine Einlasskammer (14), deren Volumen in Abhängigkeit von der Verschiebung des bewegbaren Kolbens (3) variiert, und eine Verteilerleitung (13), die in dem bewegbaren Kolben (3) eingerichtet ist,
- wobei der Kolben (3) und/oder der Schaft (10) dazu konfiguriert sind, Durchgangskanäle (12) für Reinigungsfluid zwischen sich vorzusehen,
**dadurch gekennzeichnet, dass** mindestens zwei Durchgangskanäle (12) gemäß der Längsachse (X) unterschiedliche axiale Abmessungen aufweisen, wobei jeder Durchgangskanal (12) eine axiale Abmessung aufweist, die sich von der der angrenzenden Kanäle in der kreisförmigen Reihenanordnung unterscheidet.

2. Reinigungsvorrichtung nach Anspruch 1, **dadurch gekennzeichnet, dass** die Durchgangskanäle (12) parallel zur Längsachse (X) angeordnet sind.

3. Reinigungsvorrichtung nach Anspruch 1 oder 2, **dadurch gekennzeichnet, dass** mindestens zwei Durchgangskanäle (12) variable radiale Abmessungen aufweisen.

4. Reinigungsvorrichtung nach dem vorhergehenden Anspruch, **dadurch gekennzeichnet, dass** der Durchgangskanal (12), der die größte axiale Abmessung aufweist, die kleinste radiale Abmessung aufweist.

5. Reinigungsvorrichtung nach einem der vorhergehenden Ansprüche, **dadurch gekennzeichnet, dass** mindestens ein Durchgangskanal (12) entlang der Längsabmessung (X) unterbrochen ist.

6. Reinigungsvorrichtung nach einem der vorhergehenden Ansprüche, **dadurch gekennzeichnet, dass** die Durchgangskanäle (12) in Reihe um die Längsachse (X) angeordnet sind, mit einer schrittweisen Veränderung der axialen Abmessungen der Durchgangskanäle (12) vom Anfang bis zum Ende der Reihe.

7. Reinigungsvorrichtung nach einem der vorhergehenden Ansprüche, **dadurch gekennzeichnet, dass** die Durchgangskanäle (12) jeweils eine Nut (120) umfassen, die in dem bewegbaren Kolben (3) und/oder in dem Schaft (10) eingerichtet ist.

8. Reinigungsvorrichtung nach dem vorhergehenden Anspruch, **dadurch gekennzeichnet, dass** die Nuten (120) auf der Innenwand des Kolbens (3), die die Verteilerleitung (13) abgrenzt, eingerichtet sind, wobei diese Nuten in die Einlasskammer (14) münden.

9. Reinigungsvorrichtung nach einem der vorhergehenden Ansprüche, **dadurch gekennzeichnet, dass** Mittel zum Verschieben des Kolbens (3) außer den Fluidzuführmitteln elastische Mittel (4) beinhalten, die in dem Hohlkörper (1) untergebracht sind, um den bewegbaren Kolben (3) tendenziell wieder in die Ruheendstellung zurückzubringen.

10. Reinigungsvorrichtung nach einem der vorhergehenden Ansprüche, **dadurch gekennzeichnet, dass** der Hohlkolben (3) Folgendes umfasst: einen im Wesentlichen zylindrischen mittleren Abschnitt (16), der fähig ist, innerhalb einer hohlen Führungshülse (18), die an dem dem Eintrittsflansch (2) entgegengesetzten Ende des Hohlkörpers (1) eingerichtet ist, zu gleiten, einen Verteilerendabschnitt (17), der den mittleren Abschnitt (16) verlängert und an dessen freiem Ende das Verteilerelement (8, 9) befestigt werden kann, und einen Einlassabschnitt (19), der den mittleren Abschnitt (16) auf der gegenüberliegenden Seite des Verteilerendabschnitts (17) verlängert und dazu konfiguriert ist, im Inneren des Hohlkörpers (1) zu gleiten.

11. Reinigungsvorrichtung nach dem vorhergehenden Anspruch, **dadurch gekennzeichnet, dass** die Durchgangskanäle (12) jeweils eine Nut (120) umfassen, die entlang dem Einlassabschnitt (19) in dem Kolben (3) eingerichtet ist.

12. Reinigungsvorrichtung nach einem der Ansprüche 10 oder 11, **dadurch gekennzeichnet, dass** an einem freien Ende (15) des Schafts (10) eine umlaufende Auskehlung (23) angeordnet ist, um eine Dichtung (6) aufzunehmen, sodass der Schaft (10), der mit der Dichtung (6) versehen ist, dicht in dem mittleren Abschnitt (19) des Kolbens (3) gleiten kann.

13. Kraftfahrzeug, das mit einem optischen Detektionssystem und einem assoziierten optischen Sensor ausgerüstet ist, **dadurch gekennzeichnet, dass** es mindestens eine Reinigungsvorrichtung nach einem der vorhergehenden Ansprüche umfasst, die dazu bestimmt ist, mindestens ein Fluid auf eine Oberfläche des zu reinigenden optischen Sensors zu spritzen.

## Claims

1. A cleaning device (100), intended to spray at least one fluid toward a surface that is to be cleaned belonging to a motor vehicle, such as an optical sensor of an optical detection system, the cleaning device comprising at least:
- a hollow body (1) closed at one end by an inlet flange (2),
- a mobile piston (3) able to slide along a longitudinal axis (X) in the hollow body (1) and which at a first end bears a cleaning fluid distribution element (8, 9), the piston being able to move between a retracted extreme position and a deployed extreme position,
- a rod (10) secured to the inlet flange (2) which runs parallel to the longitudinal axis (X) and along which the mobile piston (3) slides,
- means for conveying cleaning fluid through the hollow body (1), from a fluid intake end-piece (11) as far as the distribution element (8, 9), comprising at least one intake chamber (14), the volume of which varies according to the movement of the mobile piston (3) and a distribution duct (13) formed in the mobile piston (3),
- the piston (3) and/or the rod (10) being configured to provide between them passageways (12) for cleaning fluid,
**characterized in that** at least two passageways (12) have different axial dimensions along the longitudinal axis (X), each passageway (12) having an axial dimension that is distinct from that of the adjacent passageways in the arrangement whereby the passageways are arranged in a circular series.

2. The cleaning device as claimed in claim 1, **characterized in that** the passageways (12) are arranged parallel to the longitudinal axis (X).

3. The cleaning device as claimed in claim 1 or 2, **characterized in that** at least two passageways (12) have variable radial dimensions.

4. The cleaning device as claimed in the preceding claim, **characterized in that** the passageway (12) that has the longest axial dimension has the shortest radial dimension.

5. The cleaning device as claimed in one of the preceding claims, **characterized in that** at least one passageway (12) is interrupted along the longitudinal dimension (X).

6. The cleaning device as claimed in any one of the preceding claims, **characterized in that** the passageways (12) are arranged in series around the longitudinal axis (X), with a progressive evolution in the axial dimensions of the passageways (12) from the start to the end of the series.

7. The cleaning device as claimed in any one of the preceding claims, **characterized in that** the passageways (12) respectively comprise a slot (120) formed in the mobile piston (3) and/or in the rod (10) .

8. The cleaning device as claimed in the preceding claim, **characterized in that** the slots (120) are formed on the internal wall of the piston (3) delimiting the distribution duct (13), these slots opening onto the intake chamber (14).

9. The cleaning device as claimed in any one of the preceding claims, **characterized in that** the means for moving the piston (3) comprise, in addition to the fluid conveying means, elastic means (4) housed in the hollow body (1) to tend to return the mobile piston (3) to the extreme rest position.

10. The cleaning device as claimed in any one of the preceding claims, **characterized in that** the hollow piston (3) comprises a substantially cylindrical central part (16), able to slide inside a hollow guide sleeve (18) formed at the opposite end of the hollow body (1) to the inlet flange (2), a terminal distribution part (17) extending the central part (16) and to the free end of which the distribution element (8, 9) is able to be fixed, and an intake part (19) extending the central part (16) in the opposite direction to the terminal distribution part (17) and configured to slide inside the hollow body (1) .

11. The cleaning device as claimed in the preceding claim, **characterized in that** the passageways (12) respectively comprise a slot (120) formed in the piston (3) along the intake part (19).

12. The cleaning device as claimed in either one of claims 10 and 11, **characterized in that** a peripheral groove (23) is arranged at a free end (15) of the rod (10) to accommodate a seal (6) such that the rod (10), fitted with said seal (6), can slide sealingly in the central part (19) of the piston (3).

13. A motor vehicle equipped with an optical detection system and with an associated optical sensor, **characterized in that** it comprises at least one cleaning device as claimed in any one of the preceding claims, intended to spray at least one fluid toward a surface of the optical sensor that is to be cleaned.
